# EUROPÄISCHE PATENTSCHRIFT

(11) **EP 3 615 356 B1**
(45) Veröffentlichungstag und Bekanntmachung des Hinweises auf die Patenterteilung: **27.01.2021**
(21) Anmeldenummer: 18715577.5
(22) Anmeldetag: 27.03.2018
(51) Int. Cl.: B60G 7/00

(54) **VIERPUNKTLENKER**
FOUR-POINT LINK
BRAS DE SUSPENSION ARTICULÉ EN QUATRE POINTS

(30) Priorität: 28.04.2017 DE 102017207166
(43) Veröffentlichungstag der Anmeldung: 04.03.2020
(73) Patentinhaber: ZF Friedrichshafen AG, 88046 Friedrichshafen (DE)
(72) Erfinder: STIEGLITZ, Andre, 49086 Osnabrück (DE); MÜLLER, Ingolf, 76872 Minfeld (DE); BAUER, Philipp, 88097 Eriskirch (DE); BÜRGMANN, Manfred, 88213 Ravensburg (DE); NIEKE, Patricia, 01307 Dresden (DE)
(74) Vertreter: ZF Friedrichshafen AG
(86) Internationale Anmeldenummer: PCT/EP2018/057689
(87) Internationale Veröffentlichungsnummer: WO 2018/197132

(56) Entgegenhaltungen:
- WO-A1-01/77771
- DE-A1-102005 002 515
- DE-A1-102011 079 654
- GB-A- 2 154 520

## Beschreibung

Die Erfindung betrifft einen Vierpunktlenker für eine Radaufhängung eines Fahrzeugs, insbesondere für eine Radaufhängung eines PKW oder NKW. Vierpunktlenker werden insbesondere in Nutzfahrzeugen verwendet, um eine Starrachse federbar in einem Fahrzeugrahmen zu führen. Der Vierpunktlenker ist dabei für die Querführung und die Längsführung der Achse verantwortlich. Weiterhin erfüllt der Vierpunktlenker die Funktion eines Stabilisators.

Aus der DE 10 2004 014 610 A1 ist ein Vierpunktlenker für die Achsaufhängung einer Starrachse insbesondere eines Nutzfahrzeugs entsprechend des Oberbegriffs des Anspruchs 1 bekannt. Der Vierpunktlenker weist vier Lageraugen auf, von denen zwei Lageraugen mit der Achse und zwei Lageraugen mit dem Fahrzeugrahmen gelenkig verbindbar sind. Der Vierpunktlenker ist als einstückiges, tordierbares und als ein durch die Lageraugen definiertes viereckbeziehungsweise trapezförmiges Hohlgehäuse ausgebildet. Das Hohlgehäuse ist im Wesentlichen durch ein fahrzeugbezogen liegend angeordnetes, mehrseitig offenes Rohr mit im Wesentlichen abgerundet rechteckigem bis O-förmigem Querschnitt gebildet

Während das Dokument DE 10 2005 002 515 A1 einen konventionellen Vierpunktlenker aus Stahl aufzeigt, offenbart das Dokument GB 2 154 520 einen Lenker mit einem in den Hinterschnitt zur formschlüssigen Verbindung der Buchse mit dem Trägerarm des Kernelements eingreifenden Schaumkern.

Der Erfindung liegt die Aufgabe zugrunde, einen Vierpunktlenker für eine Radaufhängung eines Fahrzeugs weiterzuentwickeln, wobei insbesondere die Großserientauglichkeit verbessert und der Herstellungsprozess beschleunigt werden sollen.

Die Aufgabe wird gelöst durch den Gegenstand von Patentanspruch 1. Bevorzugte Ausführungsformen sind Gegenstand der abhängigen Ansprüche.

Ein erfindungsgemäßer Vierpunktlenker für eine Radaufhängung eines Fahrzeugs umfasst ein Kernelement, einen Faden sowie vier Buchsen, wobei der Faden mit einem Harz vorimprägniert ist, wobei ferner das Kernelement ein Torsionselement sowie vier mit dem Torsionselement einteilig verbundene Trägerarme aufweist, wobei das Kernelement und die jeweilige Buchse zumindest teilweise mit dem Faden umwickelt sind, wobei die jeweilige Buchse zur Aufnahme eines jeweiligen Lagerelements an einem jeweiligen distalen Ende des jeweiligen Trägerarms angeordnet ist, wobei die jeweilige Buchse zumindest ein Verankerungselement aufweist, wobei zwischen dem zumindest einen Verankerungselement und der Buchse zumindest ein Hinterschnitt ausgebildet ist, und wobei das Kernelement in den Hinterschnitt zur formschlüssigen Verbindung der Buchse mit dem Trägerarm des Kernelements eingreift.

Unter einer Radaufhängung ist eine Vorrichtung zu verstehen, welche die Räder des Fahrzeugs lenk- und/oder federbar mit einer Karosserie und/oder einem Rahmen des Fahrzeugs koppelt. Bei dem Fahrzeug kann es sich um ein Kraftfahrzeug, insbesondere um ein Nutzkraftfahrzeug, aber auch ein Personenkraftfahrzeug handeln.

Das Kernelement ist im Wesentlichen dazu vorgesehen, die Form des Vierpunktlenkers auszubilden. Mithin ist das Kernelement nicht zur Aufnahme von Lasten vorgesehen sondern ausschließlich zur Ablage beziehungsweise Umwicklung mit dem Faden. Mit anderen Worten werden die Lasten und Kräfte, die durch eine Fahrzeugachse beziehungsweise einen Radträger eingeleitet werden, lediglich von der aus dem Faden gebildeten Außenhaut des Vierpunktlenkers aufgenommen. Daher ist der Faden zumindest kraftschlüssig mit den vier Buchsen verbunden. Zusätzlich kann der Faden auch formschlüssig mit den vier Buchsen verbunden sein.

Die vier Trägerarme sind dazu vorgesehen, die Fahrzeugachse oder den Radträger mit einem Rahmen und/oder einer Karosserie des Fahrzeugs zu koppeln. Dazu sind zwei Trägerarme gelenkig mit der Fahrzeugachse oder dem Radträger verbunden, während die zwei anderen Trägerarme gelenkig mit der Karosserie oder dem Rahmen des Fahrzeugs verbunden sind. Über das Torsionselement sind die Trägerarme miteinander verbunden. Gelenkig bezeichnet hier eine Verdrehbarkeit um mindestens eine Achse. Das Torsionselement dient dazu, die vier Trägerarme gegenüber einer Verschwenkung zu stabilisieren. Die Trägerarme und das Torsionselement sind derart angeordnet, dass eine Verschwenkung des jeweiligen Trägerarms, das heißt eine Verdrehung des jeweiligen Trägerarms um die Torsionsachse, mit einer Torsion des Torsionselements einhergeht. Zu der Torsion kommt es infolge eines Torsionsmoments, welches der jeweilige Trägerarm bei der Verschwenkung auf das Torsionselement ausübt.

Der erfindungsgemäße Vierpunktlenker ermöglicht aufgrund der Herstellung, insbesondere aufgrund der Faserausrichtung beim Wickeln, die Einstellung einer definierten Torsionssteifigkeit bezüglich der Wankstabilisierung, einer hohe Seitensteifigkeit zur Führung der Achse, einer bestimmten Längsnachgiebigkeit bezüglich eines besseren Komfortverhaltens und der Darstellung einer definierten Kinematik beziehungsweise Elastokinematik über den Federweg. Insbesondere ist es möglich nahezu die gesamte Kinematik durch den Vierpunktlenker selbst abzubilden und somit die in den Buchsen aufgenommenen Lagerelemente, insbesondere Gummilager zu entlasten.

Das Verankerungselement der jeweiligen Buchse ist im Wesentlichen dazu vorgesehen, die Buchse formschlüssig mit dem Trägerarm zu verbinden. Insbesondere leitet das Verankerungselement Zug- und Druck-Längskräfte, Seitenkräfte und Vertikalkräfte in den Vierpunktlenker ein, wobei insbesondere die Vertikalkräfte über den Formschluss von der Buchse in den Vierpunktlenker geleitet werden. Ferner wirkt die formschlüssige Verbindung zwischen der jeweiligen Buchse und dem jeweiligen Trägerarm den Fliehkräften beim Wickelprozess entgegen.

Eine erfindungsgemäße Gestaltungsform des zumindest einen Verankerungselements sieht vor, dass zwischen dem rohrförmigen Buchsenabschnitt und dem Verankerungselement ein Hinterschnitt beziehungsweise eine Hinterschnittstruktur ausbildet ist, wobei der Hinterschnitt der bei der Herstellung des Kernelements mit dem schaumartigen Material des Kernelements gefüllt wird und die Buchse somit formschlüssig mit dem Kernelement verbindet und zusätzlich gegen ein Verdrehen sichert. Mithin liegt zu Beginn des Wickelprozesses bereits eine formschlüssige Verbindung zwischen der jeweiligen Buchse und dem Trägerarm in Längsrichtung des Trägerarms vor, sodass der Wickelprozess früher beschleunigt oder von Beginn an mit hoher Geschwindigkeit erfolgen kann. Dadurch wird der Herstellungsprozess des erfindungsgemäßen Vierpunktlenkers wesentlich beschleunigt.

Der Faden oder die Fadengruppe besteht vorzugsweise aus einer Vielzahl von Endlosfasern, die von einem Harz umgeben sind. Unter einer Fadengruppe sind mehrere Fäden zu verstehen, die zu einem Bündel zusammengefasst sind. Dieses Bündel stellt wiederum einen Faden dar. Insbesondere kann der Faden unmittelbar vor dem Wickeln des Kernelements imprägniert werden oder es kann ein mit Harz vorimprägnierter Faden, insbesondere ein sogenanntes TowPreg-Halbzeug oder PrePreg-Faden verwendet werden. Bei dem Nasswickelverfahren, wird der Faden unmittelbar vor dem Wickeln in Harz getränkt und um das Kernelement gewickelt. Eine maximale Ablegegeschwindigkeit des Fadens auf das Kernelement ist aufgrund der Harzverluste, durch beispielsweise Fliehkräfte während des Wickelns, von circa 0,5 m/s möglich. Demgegenüber kann die Ablegegeschwindigkeit durch die Verwendung der vorimprägnierten Fäden erheblich gesteigert werden, da das Harz höher viskos ist und somit Fliehkräfte einen geringen Einfluss haben. Mithin ist der Faden aus Faserkunststoffverbundmaterial ausgeformt. Vorzugsweise ist der Faden aus einem carbonfaserverstärkten Kunststoff, einem glasfaserverstärkten Kunststoff, einem aramidfaserverstärkten Kunststoff oder einem anderen geeigneten Faserkunststoffverbundmaterial ausgeformt.

In einer bevorzugten Weiterbildung der Komponente ist der Faden gespannt, das heißt mit einer Kraft beaufschlagt, die eine Spannung des Fadens bewirkt. Infolgedessen ist der Faden kraftschlüssig mit dem jeweiligen Trägerarm und dem Torsionselement verbunden. Der Faden verläuft vorzugsweise derart, dass eine Verschwenkung des jeweiligen Trägerarms durch den Kraftschluss des Fadens mit dem Trägerarm eine auf den Faden wirkende Kraft induziert, die wiederum über den Kraftschluss zwischen dem Faden und dem Torsionselement auf das Torsionselement übertragen wird. Die induzierte Kraft bewirkt dabei eine Vergrößerung der Spannung des Fadens.

Vorzugsweise ist das mindestens eine Verankerungselement über zumindest einen Steg einteilig mit der jeweiligen Buchse verbunden, wobei der zumindest eine Steg eine jeweilige Führungsfläche zur Aufnahme und Führung des Fadens aufweist. Dadurch bildet sich eine kraftschlüssige Verbindung zwischen dem Steg und dem darauf zur Anlage kommenden Fadenabschnitt. Mithin ist der mindestens eine Steg als Verbindungselement zwischen dem ringförmigen Buchsenabschnitt und dem Verankerungselement vorgesehen.

Bevorzugt weist die jeweilige Buchse zwei Stege auf, die einen Hohlraum umschließen, wobei die beiden Stege in Richtung des Trägerarms zusammenlaufen und in das Verankerungselement münden, und wobei das zumindest eine Verankerungselement zwei Nuten aufweist, die den jeweiligen Hinterschnitt zur Aufnahme des Kernelements bilden und zur formschlüssigen Verbindung der Buchse mit dem Trägerarm des Kernelements vorgesehen sind. Der Hohlraum dient insbesondere zur Massenreduzierung der Buchse und ist somit leer beziehungsweise lediglich mit Luft gefüllt. Es ist jedoch auch denkbar den Hohlraum mit einem Füllwerkstoff, insbesondere einem geschäumten Werkstoff zu füllen.

Gemäß einer bevorzugten Ausführungsform weist die jeweilige Buchse zwei Führungsarme zur Aufnahme und Führung des Fadens auf. Die Führungsarme sind tangential an dem ringförmigen Buchsenabschnitt der Buchse angeordnet und im Wesentlichen parallel zueinander ausgebildet. Die beiden Führungsarme verbessern eine kraftschlüssige Verbindung insbesondere zwischen der Buchse und dem Faden aber auch zwischen der Buchse und dem jeweiligen Trägerarm durch eine größere Anbindungsfläche.

Des Weiteren bevorzugt weist das mindestens eine Verankerungselement zumindest eine Flanke zur Aufnahme und Führung des Fadens zu einem Kreuzungspunkt auf. Die Führungsflächen befinden sich dabei in einer Ebene mit der jeweiligen Flanke des Verankerungselements, wobei das mindestens eine Verankerungselement alternativ auch zwei oder mehrere Flanken aufweisen kann. Unter dem Kreuzungspunkt ist der Punkt zu verstehen, an dem sich zwei Fadenabschnitte beim Wickelprozess kreuzen. Bei jeder Umwickelung der Buchse liegen somit zumindest zwei Abschnitte des Fadens direkt übereinander und bilden einen Kreuzungspunkt. Um das Überlagern mehrerer Kreuzungspunkte zu vermeiden und somit die Höhe des Kreuzungspunktes zu verringern, können die Fadenabschnitte in die Breite verlagert werden, sodass dann die Breite des Kreuzungspunktes zunimmt. Insbesondere wird durch die Fadenführung und Ausbildung des Kreuzungspunktes ein Fachwerk gebildet, wobei das Fachwerk eine verbesserte Lastaufnahme und Lastverteilung realisiert. Mithin bildet die Fadenwicklung durch gezielte Fadenführung ein Faser-Fachwerk aus.

Am Verankerungselement können alternativ zumindest zwei Verankerungsschenkel ausgebildet sein, wobei zwischen den Verankerungsschenkeln eine Aussparung ausgebildet ist, die die Anlagefläche des Verankerungselements am Kernelement vergrößert und ein Auftreten von Spaltzugkräften und Spaltdruckkräften im Kreuzungspunkt der Fadenabschnitte vermeidet. Dadurch können Druckbeanspruchungen besser von der Buchse in den Vierpunktlenker eingeleitet werden, da Spannungsüberhöhungen durch Spaltzugkräfte im Kreuzungspunkt der Fadenabschnitte vermieden werden.

Vorzugsweise weist die jeweilige Buchse zwei Verankerungselemente auf, die zur Aufnahme und Führung des Fadens zum Kreuzungspunkt zusammenlaufen und an einem Scheitelpunkt miteinander verbunden sind, wobei am Scheitelpunkt zumindest eine Ausnehmung zur Aufnahme des Kernelements in Richtung der Buchse ausgebildet ist, wobei das Kernelement in den Hinterschnitt zur formschlüssigen Verbindung der Buchse mit dem Trägerarm des Kernelements eingreift. Die zumindest eine Ausnehmung teilt die beiden Verankerungselemente zumindest teilweise beziehungsweise abschnittsweise in mindestens zwei Teile. Der Scheitelpunkt, der die beiden Verankerungselemente miteinander verbindet, ist vorzugsweise abgerundet ausgebildet. Vorteilhaft ist dabei eine verbesserte Spannungsverteilung und eine Verhinderung von Spannungsüberhöhungen im Kreuzungspunkt des Fadens.

Die Erfindung schließt die technische Lehre ein, dass genau ein Faden mehrmals um das Kernelement und die jeweilige Buchse gewickelt ist. Insbesondere weist der Faden eine Länge von 7km bis 11km, vorzugsweise 9km auf und wird automatisiert von einer Wickelachse abgewickelt und mittels eines Roboters auf das Kernelement aufgewickelt, um den Vierpunktlenker auszubilden. Ferner ist es aber auch denkbar, dass zwei oder mehrere Roboter gleichzeitig das Kernelement mit einem jeweiligen Faden umwickeln, um den Vierpunktlenker auszubilden.

Vorzugsweise ist das Kernelement aus einem Schaummaterial ausgebildet. Insbesondere ist das Kernelement aus einem festen, leichten, permanenten Schaummaterial ausgebildet. Vorzugsweise ist das Schaummaterial aus einem Polymer, beispielsweise aus Polyurethan, Polystyrol oder Polymethacrylimid ausgebildet. Ferner kann das Kernelement auch als Inliner-Kern, verlorener Kern oder Blaskern ausgebildet sein. Wesentlich ist insbesondere die Fähigkeit des Kernelements mit dem Faden umwickelt zu werden, und somit als Formgeber zu dienen.

Bevorzugt ist die jeweilige Buchse aus einem metallischen Werkstoff ausgebildet. Insbesondere ist die Buchse aus einer Stahllegierung oder einer Leichtmetalllegierung, insbesondere einer Aluminium- oder Magnesiumlegierung ausgebildet. Ferner wird die Buchse durch Strangpressen ausgebildet. Ferner ist die Buchse zumindest teilweise mit dem Kernelement verklebt.

Gemäß einem bevorzugten Ausführungsbeispiel ist der Faden an dem jeweiligen Trägerarm im Wesentlichen parallel zu einer jeweiligen Längsachse des jeweiligen Trägerarms geführt. Vorzugsweise ist der Faden radial um den jeweiligen Trägerarm und das damit einteilig verbundene Torsionselement gewickelt. Insbesondere sind die beiden rahmenseitigen Trägerarme vom Torsionselement derart abgewinkelt, dass sich der Faden in einem kontinuierlichen Wickelprozess auf dem Kernelement ablegen lässt. Die Trägerarme sind im Wesentlichen dazu vorgesehen, eine Biegung aufzunehmen.

Bevorzugt ist der Faden an einer jeweiligen Stirnfläche des jeweiligen Trägerarms in einem Winkelbereich von 15° bis 45° zu einer jeweiligen Längsachse des jeweiligen Trägerarms geführt. Dies ermöglicht z. B. die Aufnahme von Schubspannungen, die aus Querkräften generiert werden. Vorzugsweise sind die Trägerarme an der jeweiligen Stirnfläche fachwerkartig mit dem Faden umwickelt. Dadurch wird der jeweilige Trägerarm leichtbauend versteift.

Ferner bevorzugt ist der Faden an dem Torsionselement in einem Winkelbereich von 40° bis 60° zu einer Längsachse des Vierpunktlenkers geführt. Das Torsionselement wird insbesondere durch, aus einer Torsion erwachsenden Schubspannungen belastet. Insbesondere ist die gesamte Oberfläche des Torsionselements mit dem Faden bedeckt, insbesondere mehrmals umwickelt. Vorzugsweise ist die gesamte Oberfläche des Kernelements mit dem Faden bedeckt, insbesondere mehrmals umwickelt.

Erfindungsgemäß weist die jeweilige Buchse eine größere Breite als das jeweilige Kernelement des Trägerarms zur Führung des Fadens während eines Wickelprozesses auf.

Dies unterstützt die gewünschte Faserführung im Bereich der Buchse. Der Faden wird direkt um die Buchse herum und entlang des Kernelements geführt. Die Ausbildung des Verankerungselements an der jeweiligen Buchse ermöglicht das Führen des Fadens parallel zum Trägerarm und insbesondere in einem vom Verankerungselement definierten Winkel.

Im Folgenden werden bevorzugte Ausführungsbeispiele der Erfindung anhand der Zeichnungen, in welcher gleiche oder ähnliche Elemente mit dem gleichen Bezugszeichen versehen sind, näher erläutert. Hierbei zeigt
- Fig. 1: eine schematische Draufsicht eines erfindungsgemäßen Vierpunktlenkers,
- Fig. 2: eine schematische Stirnseitenansicht des erfindungsgemäßen Vierpunktlenkers gemäß Fig. 1,
- Fig. 3a: eine schematische Perspektivdarstellung einer an einem teilweise dargestellten Trägerarm angeordneten Buchse gemäß einem ersten Ausführungsbeispiel,
- Fig. 3b: eine schematische Perspektivdarstellung der Buchse zur Veranschaulichung einer Wickelung mittels eines Fadens gemäß Fig. 3a,
- Fig. 4a: eine schematische Perspektivdarstellung einer Buchse gemäß einem zweiten Ausführungsbeispiel,
- Fig. 4b: eine schematische Perspektivdarstellung der Buchse zur Veranschaulichung einer Wickelung mittels eines Fadens gemäß Fig. 4a,
- Fig. 5a: eine schematische Perspektivdarstellung einer Buchse gemäß einem dritten Ausführungsbeispiel,
- Fig. 5b: eine schematische Perspektivdarstellung der Buchse zur Veranschaulichung einer Wickelung mittels eines Fadens gemäß Fig. 5a,
- Fig. 6a: eine schematische Perspektivdarstellung einer Buchse gemäß einem vierten Ausführungsbeispiel, und
- Fig. 6b: eine schematische Perspektivdarstellung der Buchse zur Veranschaulichung einer Wickelung mittels eines Fadens gemäß Fig. 6a.

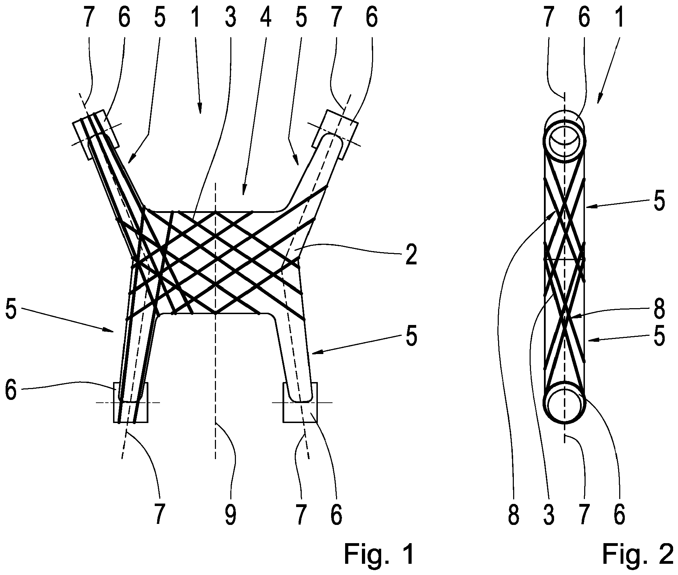

Gemäß Figur 1 umfasst ein erfindungsgemäßer Vierpunktlenker 1 für eine - hier nicht dargestellte - Radaufhängung eines - hier nicht dargestellten - Fahrzeugs ein Kernelement 2, einen Faden 3 sowie vier Buchsen 6. Der Faden 3 ist exemplarisch und stark vereinfacht dargestellt. Insbesondere bildet der Faden 3 im Wesentlichen die gesamte Oberfläche des Vierpunktlenkers 1 aus. Das Kernelement 2 besteht aus einem Torsionselement 4 sowie vier mit dem Torsionselement 4 einteilig verbundene Trägerarme 5. An einem jeweiligen distalen Ende des jeweiligen Trägerarms 5 ist die jeweilige Buchse 6 zur Aufnahme eines jeweiligen - hier nicht dargestellten - Lagerelements, insbesondere Molekulargelenks angeordnet und formschlüssig mit dem jeweiligen Trägerarm 5 verbunden. Der Vierpunktlenker 1 wird beispielsweise in einer Sattelzugmaschine als Fahrwerksanbindung eingesetzt und übernimmt dabei die Aufgaben eines Dreiecklenkers und Stabilisators. Mithin ist der Vierpunktlenker 1 für die Querführung und maßgeblich für die Längsführung der Achse verantwortlich. Ferner wird über den Vierpunktlenker 1 auch die Wankstabilisierung dargestellt.

Dadurch, dass das Kernelement 2 und die jeweilige Buchse 6 zumindest teilweise mit dem Faden 3 umwickelt sind, sind die jeweilige Buchse 6 und der Faden 3 zumindest kraftschlüssig miteinander verbunden. Das Kernelement 2 ist nicht lastführend und dient nur der Formgebung für den Faden 3. Der Faden 3 besteht aus einer Vielzahl von endlosfasern und ist mit einem Harz vorimprägniert. Demgegenüber ist das Kernelement 2 aus einem Schaummaterial ausgebildet. Ferner ist die jeweilige Buchse 6 in einem Strangpressverfahren aus einem metallischen Werkstoff, insbesondere Aluminium ausgebildet. Das Kernelement 2, der Faden 3 und die vier Buchsen 6 weisen eine Quasi-Integralbauweise mit intrinsischer Fügung auf. Genau ein Faden 3 ist mehrmals um das Kernelement 2 und die jeweilige Buchse 6 gewickelt. Der Faden 3 ist dabei an dem jeweiligen Trägerarm 5 im Wesentlichen parallel zu einer jeweiligen Längsachse 7 des jeweiligen Trägerarms 5 geführt, um Biegespannungen aufzunehmen. Ferner ist der Faden 3 an dem Torsionselement 4 in einem Winkel von circa 50° zu einer Längsachse 9 des Vierpunktlenkers 1 geführt, um Schubspannungen aus einer Torsion aufzunehmen.

Figur 2 zeigt den in Figur 1 dargestellten Vierpunktlenker 1 gemäß einer Seitenansicht. Der Faden 3 ist an einer jeweiligen Stirnfläche 8 des jeweiligen Trägerarms 5 in einem Winkel von circa 20° zu einer jeweiligen Längsachse 7 des jeweiligen Trägerarms 5 geführt, um Schubspannungen aus einer Querkraft aufzunehmen. Aus Figur 2 geht insbesondere die flache Struktur des Kernelements 2 hervor, die mit einer flachen Struktur des fertigen Vierpunktlenkers 1 einhergeht. Dadurch wird Bauraum eingespart. Ferner ist das jeweilige distale Ende des jeweiligen Trägerarms 5 zumindest teilweise komplementär zur jeweiligen Buchse 6 ausgebildet.

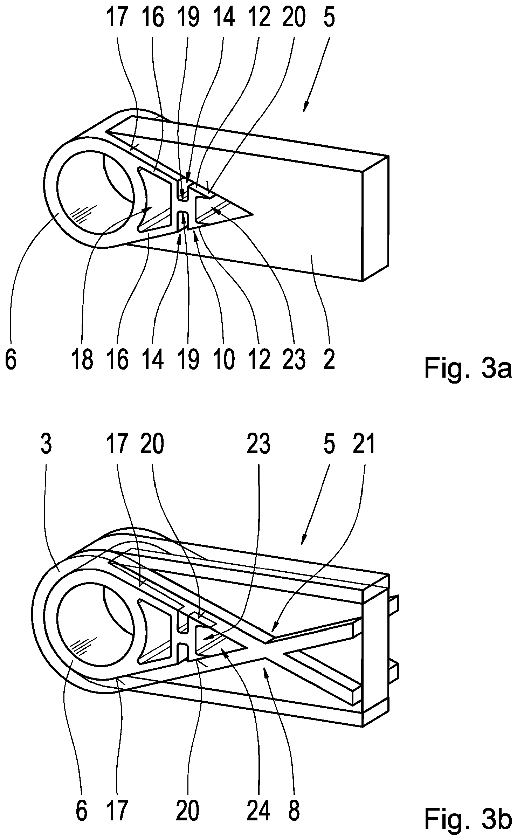

Gemäß den Figuren 3a bis 6b sind vier Ausführungsbeispiele der jeweiligen Buchse 6 des erfindungsgemäßen Vierpunktlenkers 1 exemplarisch dargestellt. Insbesondere ist ein distales Ende eines der vier Trägerarme 5 dargestellt. Nachfolgend wird einer der vier Trägerarme 5 beschrieben, jedoch gilt diese Beschreibung auch für die anderen drei identisch dazu ausgebildeten Trägerarme 5 des Kernelements 2. Die Buchse 6 ist einteilig mit einem Verankerungselement 10 verbunden. Das Verankerungselement 10 ist dazu vorgesehen, die Buchse 6 formschlüssig mit dem Trägerarm 5 des Kernelements 2 zu verbinden. Das Verankerungselement 10 ist dazu vorgesehen, die in einem Wickelprozess entstehenden Fliehkräfte in den Trägerarm 5 einzuleiten. Dadurch kann der Wickelprozess von Beginn an mit hoher Geschwindigkeit erfolgen. Die Buchse 6 weist eine größere Breite als der jeweilige Trägerarm 5 auf, um den Faden 3 während des Wickelprozesses zu führen.

Gemäß den Figuren 3a und 3b ist in einem ersten Ausführungsbeispiel das Verankerungselement 10 über zwei Stege 16 einteilig mit der Buchse 6 ausgebildet. Mithin weist die Buchse 6 zwei Stege 16 auf, die einen Hohlraum 13 umschließen, wobei die beiden Stege 16 in Richtung des Verankerungselements 10 zusammenlaufen und in das Verankerungselement 10 münden. Räumlich zwischen dem Verankerungselement 10 und der Buchse 6 ist am Verankerungselement 10 auf jeder Seite eine jeweilige Nut 19 ausgebildet, die einen jeweiligen Hinterschnitt 14 zur Aufnahme des Kernelements 2 ausbildet. Das Kernelement 2, aus dem der Trägerarm 5 ausgebildet ist, greift in den Hinterschnitt 14 ein und verbindet die Buchse 6 formschlüssig mit dem Trägerarm 5 des Kernelements 2. Ferner bildet der jeweilige Steg 16 eine jeweilige Führungsfläche 17 zur Aufnahme und Führung des in Figur 3b dargestellten Fadens 3. Am Verankerungselement 10 sind zwei Verankerungsschenkel 12 ausgebildet, wobei zwischen den Verankerungsschenkeln 12 eine Aussparung 23 ausgebildet ist, die eine Anlagefläche des Verankerungselements 10 am Trägerarm 5 des Kernelements 2 vergrößert. Die jeweiligen Führungsflächen 17 befinden sich in einer Ebene mit einer Flanke 20 des jeweiligen Verankerungsschenkels 12.

Gemäß Figur 3b kommt der Faden 3 an beiden Führungsflächen 17 und den beiden Flanken 20 zur Anlage und wird über die beiden Flanken 20 zu einem gemeinsamen Kreuzungspunkt 21 geführt. Ferner wird der Faden 3 auch radial um die Buchse 6 und in Längsrichtung entlang des Trägerarms 5 geführt. Der Faden 3 ist an der jeweiligen Stirnfläche 8 des Trägerarms 5 in einem Winkel von circa 20° in Längsrichtung des Trägerarms 5 geführt, um Schubspannungen aus Querkräften aufzunehmen, wobei dieser Winkel durch die Geometrie des Verankerungselements 10 eingestellt wird. In der Aussparung 23 bildet das Kernelement 2 einen spitz zusammenlaufenden Abschnitt 24 aus, der zur Aufnahme und Führung des Fadens 3 zum Kreuzungspunkt 21 vorgesehen ist.

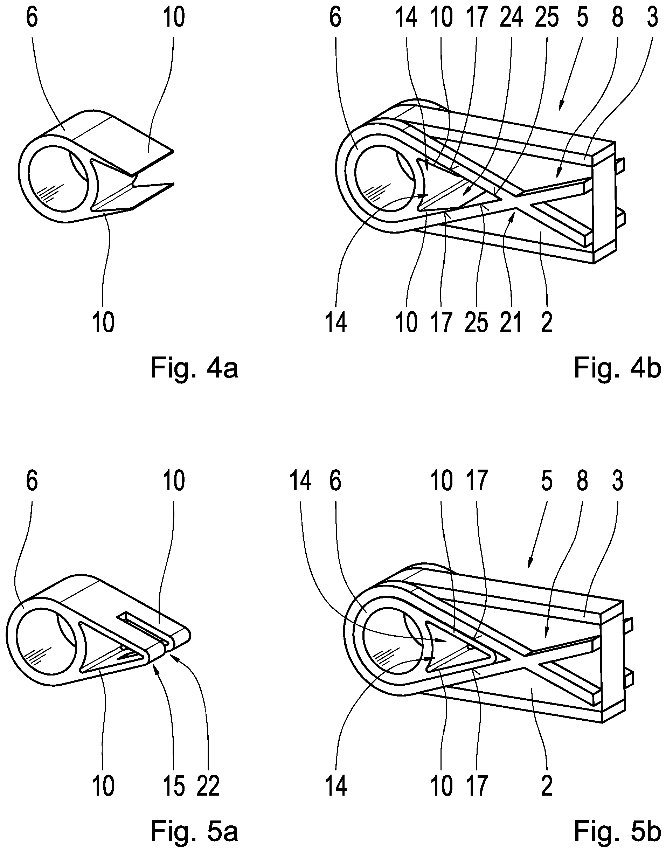

Gemäß Figur 4a weist die Buchse 6 in einem zweiten Ausführungsbeispiel zwei Verankerungselemente 10 auf. Die beiden Verankerungselemente 10 laufen unter einem Winkel von circa 20° bezogen auf die Längsachse des in Figur 4b dargestellten Trägerarms 5 zusammen.

Nach Figur 4b ist räumlich zwischen dem jeweiligen Verankerungselement 10 und der Buchse 6 ein Hinterschnitt 14 ausgebildet. Das Kernelement 2, aus dem der Trägerarm 5 ausgebildet ist, greift in den Hinterschnitt 14 ein und verbindet die Buchse 6 formschlüssig mit dem Trägerarm 5 des Kernelements 2. Ferner bilden die Verankerungselemente 10 eine jeweilige Führungsfläche 17 zur Aufnahme und Führung des Fadens 3 und sind in Richtung des Kreuzungspunktes 21 stumpf ausgebildet, wodurch Spannungsspitzen aufgrund eines besseren Spannungsverlaufs reduziert werden können. Das in den Hinterschnitt 14 eingreifende Kernelement 2 bildet ferner einen spitz zusammenlaufenden Abschnitt 24 aus, der zur Aufnahme und Führung des Fadens 3 zum Kreuzungspunkt 21 vorgesehen ist, wobei der Abschnitt 24 jeweilige Führungsflächen 25 aufweist, die sich in einer Ebene mit der jeweiligen Führungsfläche 17 des jeweiligen Verankerungselements 10 befinden. Der Faden 3 kommt an den Führungsflächen 17, 25 zur Anlage und wird zu einem gemeinsamen Kreuzungspunkt 21 geführt. Ferner wird der Faden 3 auch radial um die Buchse 6 und in Längsrichtung entlang des Trägerarms 5 geführt. Der Faden 3 ist an der jeweiligen Stirnfläche 8 des Trägerarms 5 in einem Winkel von circa 20° in Längsrichtung des Trägerarms 5 geführt, um Schubspannungen aus Querkräften aufzunehmen, wobei dieser Winkel durch die Geometrie des jeweiligen Verankerungselements 10 eingestellt wird.

Nach Figur 5a weist die jeweilige Buchse 6 in einem dritten Ausführungsbeispiel zwei Verankerungselemente 10 auf, die zur Aufnahme und Führung des Fadens 3 zu einem in Figur 5b dargestellten Kreuzungspunkt 21 zusammenlaufen. Die beiden Verankerungselemente 10 sind an einem abgerundeten Scheitelpunkt 15 miteinander verbunden. Am Scheitelpunkt 15 ist eine Ausnehmung 22 ausgebildet, die quer zu den beiden Verankerungselementen 10 ausgebildet ist und vom Scheitelpunkt 15 in Richtung des rohrförmigen Buchsenabschnitts der Buchse 6 verläuft. Die Ausnehmung 22 ermöglicht das Eindringen des Kernelements 2 in den Hinterschnitt 14. Ferner wird die Ausnehmung 22 in einem dem Strangpressverfahren nachgelagerten Verfahrensschritt beispielsweise durch Trennen hergestellt. Alternativ können auch mehrere Ausnehmungen 22 ausgebildet werden.

In Figur 5b nimmt die Ausnehmung 22 das Kernelement 2 auf, wobei das Kernelement 2 in den Hinterschnitt 14 zur formschlüssigen Verbindung der Buchse 6 mit dem Trägerarm 5 eingreift. Der Faden 3 kommt an einer Führungsflächen 17 des jeweiligen Trägerelements 10 zur Anlage und wird zu einem gemeinsamen Kreuzungspunkt 21 geführt. Ferner wird der Faden 3 auch radial um die Buchse 6 und in Längsrichtung entlang des Trägerarms 5 geführt. Der Faden 3 ist an der jeweiligen Stirnfläche 8 des Trägerarms 5 in einem Winkel von circa 20° in Längsrichtung des Trägerarms 5 geführt, um Schubspannungen aus Querkräften aufzunehmen, wobei dieser Winkel durch die Geometrie des jeweiligen Verankerungselements 10 eingestellt wird.

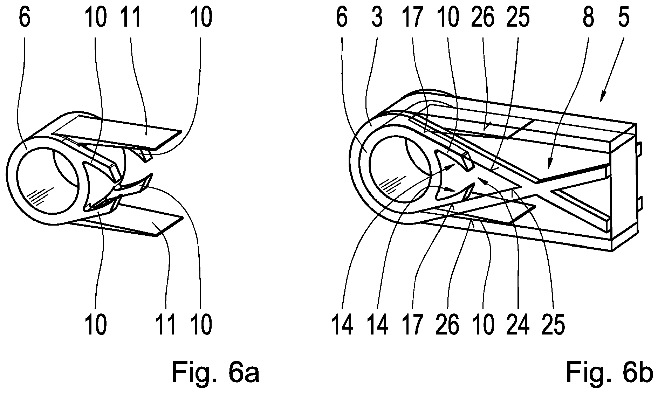

Nach Figur 6a weist die jeweilige Buchse 6 in einem vierten Ausführungsbeispiel vier Verankerungselemente 10 auf, die zur Aufnahme und Führung des Fadens 3 zu einem in Figur 6b dargestellten Kreuzungspunkt 21 zusammenlaufen sich jedoch nicht berühren. Die Verankerungselemente 10 sind in Richtung des Kreuzungspunktes 21 stumpf ausgebildet, wodurch Spannungsspitzen aufgrund eines besseren Spannungsverlaufs reduziert werden können. Ferner weist die Buchse 6 zwei Führungsarme 11 auf, die bezogen auf die Buchsenlängsachse axial zwischen den Verankerungselementen 10 angeordnet sind, wobei jeweils zwei Verankerungselemente 10 axial vor und hinter den Führungsarmen 11 angeordnet sind.

Figur 6b zeigt, dass die Führungsarme 11 die gleiche Breite wie der Trägerarm 5 aufweisen, wobei ein Führungsarm 11 an einer Oberseite und ein Führungsarm 11 an einer Unterseite des Trägerarms 5 angeordnet ist. Die Führungsarme 11 vergrößern die Haftungsfläche zwischen der Buchse 6 und dem Faden 3, wobei die Buchse 6 zumindest kraftschlüssig mit dem Faden 3 verbunden wird. Räumlich zwischen dem Verankerungselement 10 und dem rohrförmigen Buchsenabschnitt der Buchse 6 ist ein Hinterschnitt 14 ausgebildet, wobei das Kernelement 2 in den Hinterschnitt 14 zur formschlüssigen Verbindung der Buchse 6 mit dem Trägerarm 5 eingreift. Das Kernelement 2 bildet ferner einen spitz zusammenlaufenden Abschnitt 24 aus, der zur Aufnahme und Führung des Fadens 3 zum Kreuzungspunkt 21 vorgesehen ist, wobei der Abschnitt 24 jeweilige Führungsflächen 25 aufweist, die sich in einer Ebene mit der jeweiligen Führungsfläche 17 des jeweiligen Verankerungselements 10 befinden. Der Faden 3 kommt an den Führungsflächen 17, 25 zur Anlage und wird zu dem gemeinsamen Kreuzungspunkt 21 geführt. Ferner wird der Faden 3 auch radial um die Buchse 6 und in Längsrichtung entlang der Führungsflächen 26 des Führungsarmes 11 und entlang des Trägerarms 5 geführt. Dadurch wird ferner eine kraftschlüssige Verbindung zwischen der Buchse 6 und dem Faden 3 gebildet. Der Faden 3 ist an der jeweiligen Stirnfläche 8 des Trägerarms 5 in einem Winkel von circa 20° in Längsrichtung des Trägerarms 5 geführt, um Schubspannungen aus Querkräften aufzunehmen, wobei dieser Winkel durch die Geometrie des jeweiligen Verankerungselements 10 eingestellt wird.

### Bezugszeichen

- 1: Vierpunktlenker
- 2: Kernelement
- 3: Faden
- 4: Torsionselement
- 5: Trägerarm
- 6: Buchse
- 7: Längsachse eines Trägerarms
- 8: Stirnflächen eines Trägerarms
- 9: Längsachse des Vierpunktlenkers
- 10: Verankerungselement
- 11: Führungsarm
- 12: Verankerungsschenkel
- 13: Aussparung
- 14: Hinterschnitt
- 15: Scheitelpunkt
- 16: Steg
- 17: Führungsfläche
- 18: Hohlraum
- 19: Nut
- 20: Flanke
- 21: Kreuzungspunkt
- 22: Ausnehmung
- 23: Aussparung
- 24: Abschnitt
- 25: Führungsfläche
- 26: Führungsfläche

## Patentansprüche

1. Vierpunktlenker (1) für eine Radaufhängung eines Fahrzeugs, umfassend ein Kernelement (2), einen Faden (3) sowie vier Buchsen (6), wobei der Faden (3) mit einem Harz vorimprägniert ist, wobei ferner das Kernelement (2) ein Torsionselement (4) sowie vier mit dem Torsionselement (4) einteilig verbundene Trägerarme (5) aufweist, wobei das Kernelement (2) und die jeweilige Buchse (6) zumindest teilweise mit dem Faden (3) umwickelt sind, wobei die jeweilige Buchse (6) zur Aufnahme eines jeweiligen Lagerelements an einem jeweiligen distalen Ende des jeweiligen Trägerarms (5) angeordnet ist,
**dadurch gekennzeichnet, dass**
die jeweilige Buchse (6) zumindest ein Verankerungselement (10) aufweist, wobei zwischen dem zumindest einen Verankerungselement (10) und der Buchse (6) zumindest ein Hinterschnitt (14) ausgebildet ist, wobei das Kernelement (2) in den Hinterschnitt (14) zur formschlüssigen Verbindung der Buchse (6) mit dem Trägerarm (5) des Kernelements (2) eingreift, und wobei die jeweilige Buchse (6) und ihr zumindest ein Verankerungselement (10) eine größere Breite als der jeweilige Trägerarm (5) zur Aufnahme und Führung des Fadens während eines Wickelprozesses aufweisen.

2. Vierpunktlenker (1) nach Anspruch 1, **dadurch gekennzeichnet, dass** das mindestens eine Verankerungselement (10) über zumindest einen Steg (16) einteilig mit der jeweiligen Buchse (6) verbunden ist, wobei der zumindest eine Steg (16) eine jeweilige Führungsfläche (17) zur Aufnahme und Führung des Fadens (3) aufweist.

3. Vierpunktlenker (1) nach einem der vorherigen Ansprüche, **dadurch gekennzeichnet, dass** die jeweilige Buchse (6) zwei Stege (16) aufweist, die einen Hohlraum (18) umschließen, wobei die beiden Stege (16) in Richtung des Trägerarms (5) zusammenlaufen und in das Verankerungselement (10) münden, und wobei das zumindest eine Verankerungselement (10) zwei Nuten (19) aufweist, die den jeweiligen Hinterschnitt (14) zur Aufnahme des Kernelements (2) bilden und zur formschlüssigen Verbindung der Buchse (6) mit dem Trägerarm (5) des Kernelements (2) vorgesehen sind.

4. Vierpunktlenker (1) nach einem der vorherigen Ansprüche, **dadurch gekennzeichnet, dass** die jeweilige Buchse (6) zwei Führungsarme (11) zur Aufnahme und Führung des Fadens (3) aufweist.

5. Vierpunktlenker (1) nach einem der vorherigen Ansprüche, **dadurch gekennzeichnet, dass** das mindestens eine Verankerungselement (10) zumindest eine Flanke (20) zur Aufnahme und Führung des Fadens (3) zu einem Kreuzungspunkt (21) aufweist.

6. Vierpunktlenker (1) nach einem der vorherigen Ansprüche, **dadurch gekennzeichnet, dass** die jeweilige Buchse (6) zwei Verankerungselemente (10) aufweist, die zur Aufnahme und Führung des Fadens (3) zum Kreuzungspunkt (21) zusammenlaufen und an einem Scheitelpunkt (15) miteinander verbunden sind, wobei am Scheitelpunkt (15) zumindest eine Ausnehmung (22) zur Aufnahme des Kernelements (2) in Richtung der Buchse (6) ausgebildet ist, wobei das Kernelement in den Hinterschnitt (14) zur formschlüssigen Verbindung der Buchse (6) mit dem Trägerarm (5) des Kernelements (2) eingreift.

7. Vierpunktlenker (1) nach einem der vorherigen Ansprüche, **dadurch gekennzeichnet, dass** genau ein Faden (3) mehrmals um das Kernelement (2) und die jeweilige Buchse (6) gewickelt ist.

8. Vierpunktlenker (1) nach einem der vorherigen Ansprüche, **dadurch gekennzeichnet, dass** das Kernelement (2) aus einem Schaummaterial ausgebildet ist.

9. Vierpunktlenker (1) nach einem der vorherigen Ansprüche, **dadurch gekennzeichnet, dass** die jeweilige Buchse (6) aus einem metallischen Werkstoff ausgebildet ist.

10. Vierpunktlenker (1) nach einem der vorherigen Ansprüche, **dadurch gekennzeichnet, dass** der Faden (3) an dem jeweiligen Trägerarm (5) im Wesentlichen parallel zu einer jeweiligen Längsachse (7) des jeweiligen Trägerarms (5) geführt ist.

11. Vierpunktlenker (1) nach einem der vorherigen Ansprüche, **dadurch gekennzeichnet, dass** der Faden (3) an einer jeweiligen Stirnfläche (8) des jeweiligen Trägerarms (5) in einem Winkelbereich von 15° bis 45° zu einer jeweiligen Längsachse (7) des jeweiligen Trägerarms (5) geführt ist.

12. Vierpunktlenker (1) nach einem der vorherigen Ansprüche, **dadurch gekennzeichnet, dass** der Faden (3) an dem Torsionselement (4) in einem Winkelbereich von 40° bis 60° zu einer Längsachse (9) des Vierpunktlenkers (1) geführt ist.

## Claims

1. Four-point link (1) for a wheel suspension system of a vehicle, comprising a core element (2), a filament (3) and four bushings (6), the filament (3) being preimpregnated with a resin, the core element (2) having, furthermore, a torsion element (4) and four carrier arms (5) which are connected in one piece to the torsion element (4), the core element (2) and the respective bushing (6) being wound around at least partially by way of the filament (3), the respective bushing (6) being arranged in order to receive a respective bearing element at a respective distal end of the respective carrier arm (5), **characterized in that** the respective bushing (6) has at least one anchoring element (10), at least one undercut (14) being configured between the at least one anchoring element (10) and the bushing (6), the core element (2) engaging into the undercut (14) for the positively locking connection of the bushing (6) to the carrier arm (5) of the core element (2), and the respective bushing (6) and its at least one anchoring element (10) having a greater width than the respective carrier arm (5) in order to receive and guide the filament during a winding process.

2. Four-point link (1) according to Claim 1, **characterized in that** the at least one anchoring element (10) is connected in one piece to the respective bushing (6) via at least one web (16), the at least one web (16) having a respective guide face (17) for receiving and guiding the filament (3).

3. Four-point link (1) according to either of the preceding claims, **characterized in that** the respective bushing (6) has two webs (16) which enclose a cavity (18), the two webs (16) converging in the direction of the carrier arm (5) and opening into the anchoring element (10), and the at least one anchoring element (10) having two grooves (19) which form the respective undercut (14) for receiving the core element (2) and are provided for positively locking connection of the bushing (6) to the carrier arm (5) of the core element (2).

4. Four-point link (1) according to one of the preceding claims, **characterized in that** the respective bushing (6) has two guide arms (11) for receiving and guiding the filament (3).

5. Four-point link (1) according to one of the preceding claims, **characterized in that** the at least one anchoring element (10) has at least one flank (20) for receiving and guiding the filament (3) to a crossing point (21).

6. Four-point link (1) according to one of the preceding claims, **characterized in that** the respective bushing (6) has two anchoring elements (10) which converge in order to receive and guide the filament (3) to the crossing point (21) and are connected to one another at a vertex point (15), at least one recess (22) for receiving the core element (2) in the direction of the bushing (6) being configured on the vertex point (15), the core element engaging into the undercut (14) for the positively locking connection of the bushing (6) to the carrier arm (5) of the core element (2).

7. Four-point link (1) according to one of the preceding claims, **characterized in that** precisely one filament (3) is wound multiple times around the core element (2) and the respective bushing (6).

8. Four-point link (1) according to one of the preceding claims, **characterized in that** the core element (2) is configured from a foam material.

9. Four-point link (1) according to one of the preceding claims, **characterized in that** the respective bushing (6) is configured from a metallic material.

10. Four-point link (1) according to one of the preceding claims, **characterized in that** the filament (3) is guided on the respective carrier arm (5) substantially parallel to a respective longitudinal axis (7) of the respective carrier arm (5).

11. Four-point link (1) according to one of the preceding claims, **characterized in that** the filament (3) is guided on a respective end face (8) of the respective carrier arm (5) in an angular range of from 15° to 45° with respect to a respective longitudinal axis (7) of the respective carrier arm (5).

12. Four-point link (1) according to one of the preceding claims, **characterized in that** the filament (3) is guided on the torsion element (4) in an angular range of from 40° to 60° with respect to a longitudinal axis (9) of the four-point link (1).

## Revendications

1. Élément de liaison à quatre points (1) destiné à une suspension de roue d'un véhicule et comprenant un élément central (2), un fil (3) et quatre douilles (6), le fil (3) étant préimprégné d'une résine, l'élément central (2) comportant également un élément de torsion (4) et quatre bras de support (5) reliés d'une seule pièce à l'élément de torsion (4), l'élément central (2) et la douille respective (6) étant au moins partiellement entourés du fil (3), la douille respective (6) étant disposée à une extrémité distale respective du bras de support respectif (5) pour recevoir un élément de palier respectif,
**caractérisé en ce que**
la douille respective (6) comporte au moins un élément d'ancrage (10), au moins une contre-dépouille (14) étant formée entre l'au moins un élément d'ancrage (10) et la douille (6), l'élément central (2) s'engageant dans la contre-dépouille (14) pour relier par complémentarité de formes la douille (6) au bras de support (5) de l'élément central (2), et la douille respective (6) et son au moins un élément d'ancrage (10) ayant une largeur supérieure à celle du bras de support respectif (5) afin de recevoir et de guider le fil pendant un processus d'enroulement.

2. Élément de liaison à quatre points (1) selon la revendication 1, **caractérisé en ce que** l'au moins un élément d'ancrage (10) est relié d'une seule pièce à la douille respective (6) par le biais d'au moins une nervure (16), l'au moins une nervure (16) comportant une surface de guidage respective (17) destinée à recevoir et à guider le fil (3).

3. Élément de liaison à quatre points (1) selon l'une des revendications précédentes, **caractérisé en ce que** la douille respective (6) comporte deux nervures (16) qui entourent une cavité (18), les deux nervures (16) convergeant en direction du bras de support (5) et débouchant dans l'élément d'ancrage (10), et l'au moins un élément d'ancrage (10) comportant deux rainures (19) qui forment la contre-dépouille respective (14) destinée à recevoir l'élément central (2) et étant prévu pour relier par complémentarité de formes la douille (6) au bras de support (5) de l'élément central (2) .

4. Élément de liaison à quatre points (1) selon l'une des revendications précédentes, **caractérisé en ce que** la douille respective (6) comporte deux bras de guidage (11) destinés à recevoir et à guider le fil (3).

5. Élément de liaison à quatre points (1) selon l'une des revendications précédentes, **caractérisé en ce que** l'au moins un élément d'ancrage (10) comporte au moins un flanc (20) destiné à recevoir le fil (3) et à le guider vers un point de croisement (21).

6. Élément de liaison à quatre points (1) selon l'une des revendications précédentes, **caractérisé en ce que** la douille respective (6) comporte deux éléments d'ancrage (10) qui convergent pour recevoir le fil (3) et le guider vers le point d'intersection (21) et qui sont reliés l'un à l'autre au sommet (15), au moins un évidement (22) étant ménagé au sommet (15) pour recevoir l'élément central (2) dans la direction de la douille (6), l'élément central s'engageant dans la contre-dépouille (14) pour relier par complémentarité de formes la douille (6) au bras de support (5) de l'élément central (2).

7. Élément de liaison à quatre points (1) selon l'une des revendications précédentes, **caractérisé en ce qu'**exactement un fil (3) est enroulé plusieurs fois autour de l'élément central (2) et de la douille respective (6).

8. Élément de liaison à quatre points (1) selon l'une des revendications précédentes, **caractérisé en ce que** l'élément central (2) est formé à partir d'un matériau alvéolaire.

9. Élément de liaison à quatre points (1) selon l'une des revendications précédentes, **caractérisé en ce que** la douille respective (6) est formée à partir d'une matière métallique.

10. Élément de liaison à quatre points (1) selon l'une des revendications précédentes, **caractérisé en ce que** le fil (3) est guidé au niveau du bras de support respectif (5) sensiblement parallèlement à un axe longitudinal respectif (7) du bras de support respectif (5) .

11. Élément de liaison à quatre points (1) selon l'une des revendications précédentes, **caractérisé en ce que** le fil (3) est guidé au niveau d'une face frontale respective (8) du bras de support respectif (5) dans une plage angulaire de 15° à 45° par rapport à un axe longitudinal respectif (7) du bras de support respectif (5) .

12. Élément de liaison à quatre points (1) selon l'une des revendications précédentes, **caractérisé en ce que** le fil (3) est guidé au niveau de l'élément de torsion (4) dans une plage angulaire de 40° à 60° par rapport à un axe longitudinal (9) de l'élément de liaison à quatre points (1).
